# EUROPÄISCHE PATENTSCHRIFT

(11) **EP 1 369 019 B1**
(45) Veröffentlichungstag und Bekanntmachung des Hinweises auf die Patenterteilung: **05.03.2008**
(21) Anmeldenummer: 03011389.8
(22) Anmeldetag: 20.05.2003
(51) Int. Cl.: A01D 34/66

(54) **Scheibenmähwerk**
Disc cutter bar
Barre de coupe à disques

(30) Priorität: 03.06.2002 DE 10224669
(43) Veröffentlichungstag der Anmeldung: 10.12.2003
(73) Patentinhaber: CLAAS Saulgau GmbH, 88348 Bad Saulgau (DE)
(72) Erfinder: Epp, Siegfried, 88454 Hochdorf (DE); Gebele, Josef, 88348 Bad Saulgau (DE)

(56) Entgegenhaltungen:
- EP-A- 0 110 812
- EP-A- 0 965 258
- NL-A- 7 100 850
- NL-A- 7 809 795
- US-A- 4 126 988
- US-A- 4 426 828
- US-A- 4 633 656

## Beschreibung

Die Erfindung betrifft ein Scheibenmähwerk nach dem Oberbegriff des Anspruchs 1.

Scheibenmähwerke für größere Arbeitsbreiten besitzen mehrere Mähscheiben, die quer zur Fahrtrichtung nebeneinander auf einem Getriebegehäuse angeordnet und in diesem gelagert sind. An den Mähscheiben, um Messerzapfen gelenkig angeschlagen, sind die Mähklingen freibeweglich schwenk- und Hindernissen ausweichbar befestigt.

Die Antriebselemente der Mähscheiben befinden sich in dem Getriebegehäuse. Dabei sind die Antriebselemente als Antriebsstrang so ausgebildet, das dieser aus einer Reihe von nebeneinander liegenden miteinander in Eingriff stehenden Stirnrädern besteht. Die Mähscheiben selbst stehen mit Antriebsritzeln antriebsseitig mit dem Antriebsstrang in Eingriff. Der Antriebsstrang selbst ist motorisch mit der Zapfwelle eines Traktors oder eines selbstfahrenden Trägerfahrzeug verbunden.

Derartige Scheibenmähwerke sind bekannt als angebaute, gezogene und selbstfahrende Mähwerke.

Die Flugkreise der Mähklingen benachbarter Mähscheiben überdecken sich teilweise. Der Schnittpunkt dieser Flugkreise muss dabei soweit vor dem Getriebegehäuse liegen, dass die Mähklingen keine ungemähten Streifen stehen lassen.

Die Bedeutung der Ausgestaltung der Überdeckung der Flugkreise liegt darin, dass die umlaufenden Mähklingen das noch stehende Futter in Fahrtrichtung vor dem Getriebegehäuse so rechtzeitig erfassen können, dass dieses von dem Getriebegehäuse der Mähscheiben möglichst nicht vor dem Mähen nieder gedrückt wird. Gelingt dieses nicht vollständig, so bilden sich in diesem Bereich längere Stoppeln, welche im abgeernteten Feld optisch als Streifen sichtbar werden.

Die Schrift EP-A-0 110 812 weist eine Getriebewanne auf, deren Unterseite in den Überdeckungsbereichen der Flugkreise der Messerklingen Einbeulungen hat.

Ungeachtet dessen gibt es in der Praxis trotz der zuvor dargelegten Ausgestaltung der Flugkreisüberdeckung Problemsituationen, deren Ursachen unterschiedlich sein können und die häufig erst dann zur Streifenbildung führen, wenn mehrere dieser Ursachen gleichzeitig wirksam sind.

Je nach Drehrichtungszuordnung zweier benachbarter Mähscheiben besitzen deren Mähklingen innerhalb des Überdeckungsbereiches aufgrund ihrer Kreisbewegungen Bewegungskomponenten, deren Bewegungsrichtungen entweder in oder gegen die Fahrtrichtung gerichtet sind.

Dabei verursachen die Mähklingen unvermeidliche Luftströmungen, die ebenfalls abhängig von der Drehrichtungszuordnung zweier benachbarter Mähscheiben entweder in oder gegen die Fahrtrichtung gerichtet sind.

Immer dann, wenn die zuvor angesprochene Bewegungsrichtung, und daran gekoppelt die Luftströmung dieser Bewegungsrichtung, in dem Überdeckungsbereich der Flugkreise in Fahrtrichtung weisen, erhöht sich die Tendenz der Streifenbildung durch längere Stoppeln.

Dieses erklärt sich einerseits dadurch, dass bereits gemähtes Gut von den Mähklingen gegen das noch stehende Futter gedrückt wird, und anderseits dadurch, dass der durch die Luftströmung verursachte Staudruck Kräfte auf das noch stehende Futter ausübt, die in Fahrtrichtung gerichtet sind, und die geneigt sind, das noch stehende Futter in Richtung Boden zu drücken.

Je nach Futterart können auch Förderproblem im Überdeckungsbereich auftreten. Dieses äußert sich dann dadurch, dass das gemähte Futter sich in diesem Bereich zu stauen beginnt und nicht schnell genug weggefördert wird..

Des weiteren kann sich gerade bei liegendem Futter die Streifenbildung dadurch verstärken, dass der Getriebebalken sich zusätzlich auf das liegende Futter aufschiebt, und das bereits liegendem Futter dann zusätzlich durch eben seine Auflast an den Boden drückt.

Aber auch bei nichtliegendem Futter kann es in der Praxis des Mähens gerade bei nassem Futter immer wieder dazu kommen, das die Mähklingen das gemähte Futter nicht schnell genug aus dem zuvor angesprochenen kritischen Überdeckungsbereich der Mähklingen herausfördern.

Die Folge ist dann, das sich das gemähte Futter vor dem Getriebekasten besonders in dem Überdeckungsbereich der Flugkreise anstaut, wodurch die Steifenbildung häufig wiederkehrend auftritt.

Aufgabe der Erfindung ist es, durch geeignete konstruktive Maßnahmen an Scheibenmähwerken die zuvor genannten Ursachen zur Förderung der Streifenbildung abzuwehren.

Gelöst wird die Aufgabe der Erfindung mit den kennzeichnenden Merkmalen den Anspruch 1. Weitere vorteilhafte Ausgestaltungen der Erfindung sind den abhängigen Ansprüchen, der Beschreibung und den Figurendarstellungen zu entnehmen.

### Bezugszeichenliste

- 1: Getriebegehäuse
- 2: Getriebewanne
- 3: Gehäuse-Oberteil
- 4: vorderer Bereich
- 5: hinterer Bereich
- 6: Gleitschuh
- 7: Überdeckungsbereich
- 8: Unterseite
- 9: Delle
- 10: Z-förmiges Profil
- 11: dachförmige Kontur
- 12: Freiraum
- 13: horizontale Ebene
- 14: Scheitellinie
- 15: Flugkreise
- 16: Flanke
- 17: Schraubenverbindung

- F: Fahrtrichtung

Es zeigen:

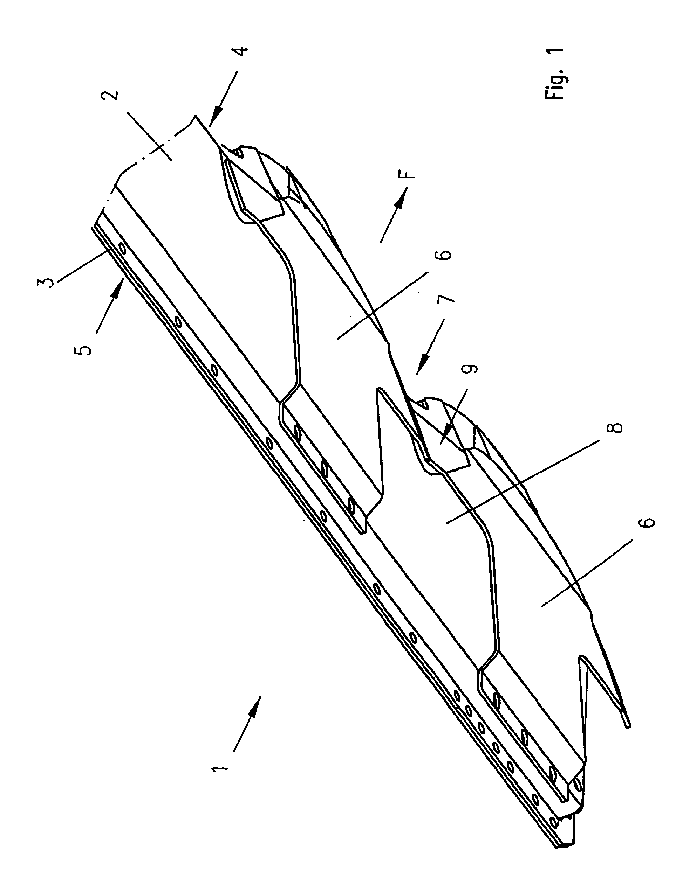

Fig.1 eine Ansicht auf die Unterseite 8 eines Getriebegehäuses 1 eines Scheibenmähwerks nach der Erfindung mit Gleitschuhen 6 in einer perspektivischen Darstellung.

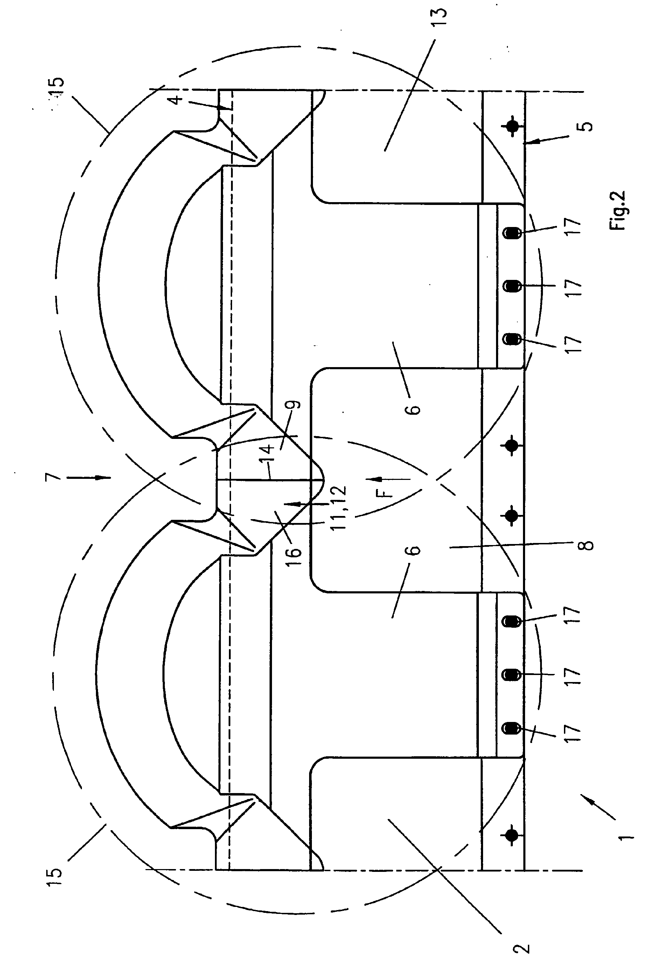

Fig.2 eine analogen Ansicht auf die Unterseite 8 eines Getriebegehäuses 1 eines Scheibenmähwerks ähnlich Fig.1 in zweidimensionaler Darstellung.
Fig.3 eine Ansicht auf den vorderen Bereich 4 eines Getriebegehäuses 1 nach der Erfindung mit Gleitschuhen 6 und mit einem Freiraum 12, welcher im Überdeckungsbereich 7 durch eine Delle 9 nach der Erfindung geschaffen wird.
Fig.4 eine Schnitt A-A gemäß Fig. 3 durch die Delle 9 des Getriebegehäuses 1 mit Schnittverlauf in Fahrtrichtung F.
Fig.5 eine Schnitt B-B gemäß Fig. 4 durch die Delle 9 des Getriebegehäuses 1 mit Schnittverlauf quer zur Fahrtrichtung F.

Die Getriebegehäuse 1 von Scheibenmähern bestehen aus einem Unterteil, der Getriebewanne 2, und einem Oberteil 3 als Deckel der Getriebewanne, in dem Mähscheiben gestützt und gelagert sind.

Die bekannten und in Rede stehenden Getriebewannen 2 werden durch Abkantungen aus Stahlblech hergestellt. Abkantungen im klassischen Sinne können aber nur einen geraden Verlauf nehmen, so das der vordere Bereich und hintere Bereich einer derartigen Abkantung einer Getriebewanne 2 in bekannter weise eine Z-förmiges Profil 10 im Querschnitt aufweißt.

Die Gestaltungsmöglichkeiten dieses Z-förmigen Profils 10 sind dabei im vorderen Bereich 5 durch konstruktive Randbedingungen erheblich eingeschränkt, wie z.b. durch die Anwesenheit der Stirnräder, die den Antriebsstrang innerhalb des Getriebekastens bilden, und insbesondere dadurch, dass der Schnittpunkt der Flugkreise vor dem Getriebegehäuse zur Verhinderung der Streifenbildung einen möglichst großen Abstand zu diesem besitzen soll.

Da derartige Getriebegehäuse 1 über den Boden hinweggleiten und damit erheblichem Verschleiß und der Gefahr von Beschädigungen durch Steine oder felsigem Untergrund ausgesetzt sind, wird die Unterseite 8 eines Getriebegehäuses 1, und damit die Getriebewanne 2, durch Verschleißbleche, ausgebildet als Gleitschuhe 6, schützend überdeckt.

Die erfinderische Ausgestaltung sieht nun vor, innerhalb des oben angesprochenen Überdeckungsbereich 7 der Flugkreise 15, einen Freiraum 12, der Unterseite 8 der Getriebewanne 2 zugewandt, durch eine Delle 9 in der Getriebewanne 2 zu schaffen. Dieser Freiraum 12 entlastet das noch stehende Futter von der Auflast des Mähbalkens an dieser Stelle, so dass das Futter dadurch weniger oder gar nicht zu Boden gedrückt wird.

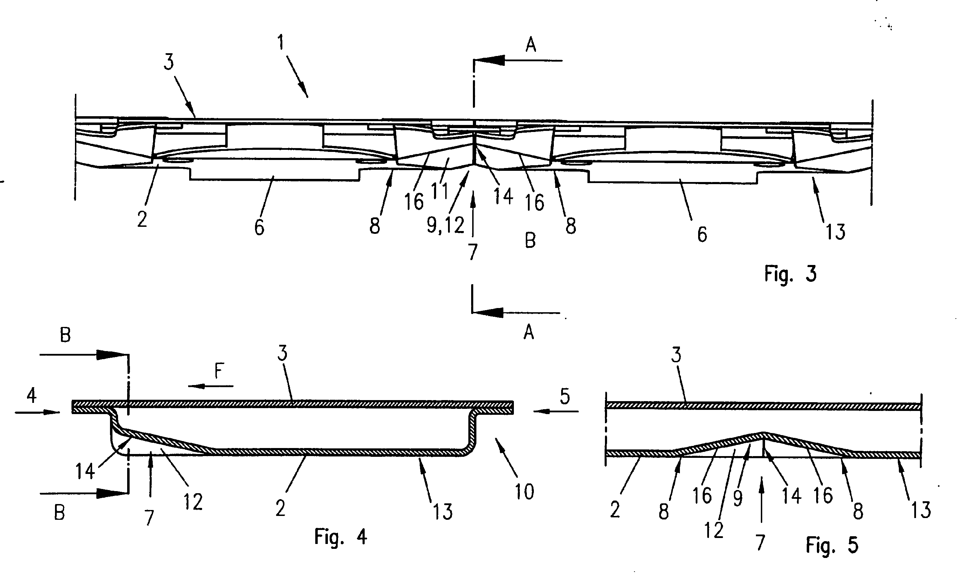

In diesem Sinne wird somit das Auflaufverhalten des Getriebegehäuses 1 auf stehendes Futter günstiger gestaltet. Dieses trägt zur Vermeidung der Staubildung und zur Reduktion der Auflast auf stehendes Futter, in Verbindung mit der Ausgestaltung der Gleitschuhe 6 durch deren wiederum der Delle 9 angepassten Formgebung bei. Dies Ausgestaltung einer derartigen Delle 9 ist an einem Beispiel in den Fig. 4 und Fig. 5 durch die Schnitte A-A bzw. B-B näher dargestellt,

Dazu wird die Getriebewanne 2 in dem angesprochenen kritischen Überdeckungsbereich 7 durch eine dachförmige in den Innenbereich des Getriebegehäuses weisend Delle 9 verformt. Die dachförmige Kontur 11 der Delle 9, weist eine Scheitellinie 14 auf, die einen ansteigenden Verlauf in Fahrtrichtung F gegenüber einer horizontalen Ebene, die parallel zum Boden verläuft, aufweist.

Dabei sind die Flanken 16 der dachförmige Kontur 11 der Delle 9 in bezug auf eine horizontale Ebene 13, die durch die Unterseite 8 des Bodens der Getriebewanne definiert ist, quer zur Fahrtrichtung F so ausgerichtet, das die Flanken 16 dachförmig zur Scheitellinie 14 hin aufsteigend ausgerichtet sind.

Diese Delle 9 ist dabei überwiegend als dachförmige Kontur 11 mit der Scheitellinie 14 ausgeformt. Dabei können die Flanken 16 der Delle 9 durchaus auch einen gewölbten Verlauf nehmen oder auch kuppelförmig ausgebildet sein..

Die Delle 9 kann dadurch erzeugt werden, indem die Getriebewanne in ihrem Zuschnitt an den Stellen, an denen sie erzeugt werden soll, entsprechende Ausnehmungen als Durchbrüche aufweist, die nach der Abkantung wieder durch entsprechend geformte Zwickel verschlossen, d.h. mit der Getriebewanne 2 verschweißt werden.

Die Gleitschuhe 6, die auch diese eingedellten Bereiche der Getriebewanne überdecken, werden ebenfalls in diesem Bereich eingedellt und dem Profil der Delle 9 folgend in ihrer räumlichen Kontur entsprechend angepasst.

## Patentansprüche

1. Scheibenmähwerk zum Anbau an ein Trägerfahrzeug, beispielsweise für einen Traktor oder für ein selbstfahrendes Trägerfahrzeug, mit mehreren um vertikale Kreiselachsen umlaufend angetriebenen mit Mähklingen besetzten Mähscheiben, die in einem Getriebegehäuse (1) unterhalb der Mähscheiben angetrieben und gelagert sind, und wobei ein Getriebegehäuse (1) aus einer Getriebewanne (2) und einem Gehäuseoberteil (3) besteht, wobei die Unterseite (8) der Getriebewanne (2) in wenigstens einem Überdeckungsbereich (7) der Flugkreise (15) der Messerklingen benachbarter Mähscheiben eine Delle (9) aufweist, die das Übergleiten des stehenden Futters am Boden in Fahrtrichtung (F) günstig beeinflusst, **dadurch gekennzeichnet, dass** die Delle (9) als Schweißbauteil mit der Getriebewanne (2) eine Einheit darstellt.

2. Scheibenmähwerk nach Anspruch 1, **dadurch gekennzeichnet, dass** wenigstens zwei benachbarte Gleitschuhe (6) der dachförmige Kontur (11) einer Delle (9) folgend, diese überdecken.

3. Scheibenmähwerk nach Anspruch 1, **dadurch gekennzeichnet, dass** die Delle (9) eine gewölbte und/oder kuppelförmige Kontur aufweist.

## Claims

1. A disc mowing mechanism for mounting to a carrier vehicle, for example for a tractor or for a self-propelled carrier vehicle, comprising a plurality of mowing discs which are driven in rotation about vertical rotor axes and which are fitted with mowing blades and which are driven and supported in a transmission housing (1) beneath the mowing discs, and wherein a transmission housing (1) comprises a transmission pan (2) and an upper housing portion (3), wherein the underside (8) of the transmission pan (2) in at least one overlap region (7) of the circular paths of movement (15) of the cutter blades of adjacent mowing discs has a depression (9) which favourably influences the sliding movement of the standing fodder over and against the bottom in the direction of travel (F), **characterised in that** the depression (9) as a welded component represents a unit with the transmission pan (2).

2. A disc mowing mechanism according to claim 1 **characterised in that** at least two adjacent sliding shoes (6), following the roof-shaped contour (11) of a depression (9), overlap same.

3. A disc mowing mechanism according to claim 1 **characterised in that** the depression (9) is of a curved and/or dome-shaped contour.

## Revendications

1. Mécanisme de coupe à disques à monter sur un véhicule porteur, par exemple pour un tracteur ou pour un véhicule porteur automoteur, avec plusieurs disques de coupe qui sont entraînés en rotation autour d'axes de disques verticaux et garnis de lames de coupe et qui sont montés et entraînés dans un carter de transmission (1) disposé sous les disques de coupe, et un carter de transmission (1) étant constitué d'un bac de transmission (2) et d'une partie supérieure de carter (3), le dessous (8) du bac de transmission (2) comportant, dans au moins une zone de recouvrement (7) des cercles de coupe (15) des lames de coupe de disques de coupe voisins, un renfoncement (9) qui influe favorablement sur le glissement du fourrage stagnant sur le fond dans le sens de la marche (F), **caractérisé en ce que** le renfoncement (9) constitue, avec le bac de transmission (2), un ensemble en forme de composant soudé.

2. Mécanisme de coupe à disques selon la revendication 1, **caractérisé en ce qu'**au moins deux patins voisins (6) du contour en forme de toit (11) recouvrent un renfoncement (9) en épousant sa forme.

3. Mécanisme de coupe à disques selon la revendication 1, **caractérisé en ce que** le renfoncement (9) présente un contour arqué et/ou en forme de coupole.
